# EUROPEAN PATENT APPLICATION

(11) **EP 0 917 365 A2**
(43) Date of publication of application: **19.05.1999**
(21) Application number: 98121862.1
(22) Date of filing: 17.11.1998
(51) Int. Cl.: H04N 7/14, H04N 7/52

(54) **Improved video conference data transfer system**

(30) Priority: 17.11.1997 JP 314868/97
(71) Applicant: NEC Corporation, Minato-ku, Tokyo 108-01 (JP)
(72) Inventor: Yoshida, Isao, c/o NEC Corporation, Tokyo 108-01 (JP)
(74) Representative: von Samson-Himmelstjerna, Friedrich R., Dipl.-Phys.

(57) **Abstract**

The present invention provides a system for transferring multiplexed data including image data and voice data through at least a communication line between at least two terminal devices. The system includes : a monitoring unit for monitoring a current state of transfer of the multiplexed data on the communication line ; and a controller unit for controlling transfers of the image data and the voice data, so that a priority is given to the transfer of the voice data whilst the transfer of the image data is controlled or discontinued in order to continue a current transfer of the voice data when the monitoring unit recognizes a delay in transfer of the multiplexed data on the communication line.

## Description

The present invention relates to an improvement of a video conference data transfer system, and more particularly to an improvement of a video conference data transfer system for transferring image data and voice data on networks.

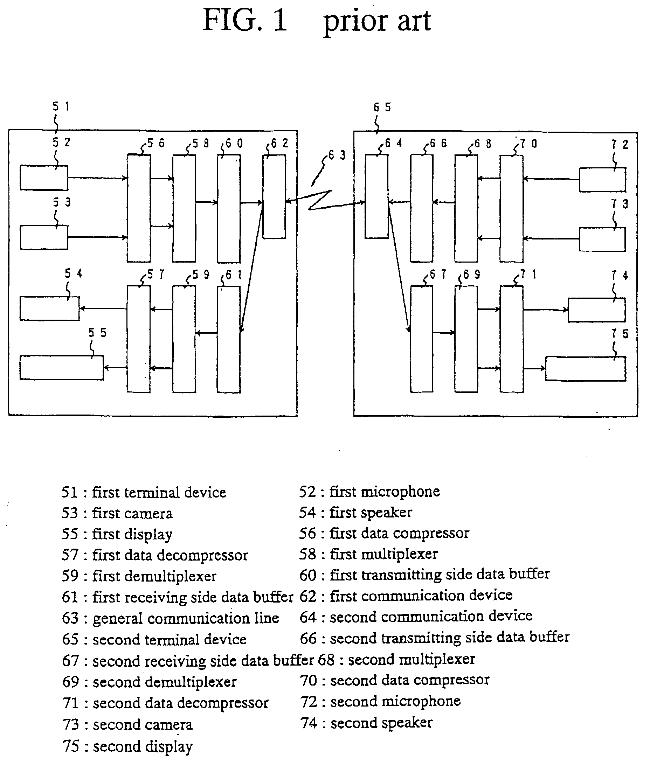

Video conferences have already been held by transferring image data and voice data through communication lines between terminal devices such as personal computers. FIG. 1 is a block diagram illustrative of a conventional video conference data transfer system for transferring image data and voice data for the video conference. The conventional video conference data transfer system comprises two terminal devices 51 and 65 and a communication line 63 connecting the two terminal devices 51 and 65 to each other or transferring image data and voice data for the video conference. The two terminal devices 51 and 65 will be referred to as a first terminal device 51 and a second terminal device 65 which have the same structure and configurations. The first and second terminal devices 51 and 65 have first and second microphones 52 and 72 respectively for capturing voices. The first and second terminal devices 51 and 65 also have first and second cameras 53 and 73 respectively for capturing images. The first and second terminal devices 51 and 65 also have first and second data compressors 56 and 70 respectively. The first compressor 56 is connected to the first microphone 52 and the first camera 53 for receiving image data captured by the first camera 53 and voice data captured by the first microphone 52 to compress the received image data and the received voice data. The second compressor 70 is also connected to the second microphone 72 and the first camera 73 for receiving image data captured by the second camera 73 and voice data captured by the second microphone 72 to compress the received image data and the received voice data. The first and second terminal devices 51 and 65 also have first and second multiplexers 58 and 68 respectively for multiplexing image data and voice data. The first multiplexer 58 is connected to the first data compressor 56 for receiving the compressed image data and the compressed voice data from the first data compressor 56 to multiplex the compressed image data and the compressed voice data. The second multiplexer 68 is connected to the second data compressor 70 for receiving the compressed image data and the compressed voice data from the second data compressor 70 to multiplex the compressed image data and the compressed voice data. The first and second terminal devices 51 and 65 also have first and second transmission data buffers 60 and 66 respectively for temporary storing the multiplexed data. The first transmission data buffer 60 is connected to the first multiplexer 58 for receiving and temporary storing the multiplexed data. The second transmission data buffer 66 is connected to the second multiplexer 68 for receiving and temporary storing the multiplexed data. The first and second terminal devices 51 and 65 also have first and second communication devices 62 and 64 respectively. The first and second communication devices 62 and 64 are connected to each other through the communication line 63. The first communication device 62 is connected to the first transmission data buffer 60 for receiving the first multiplexed data from the first transmission data buffer 60 to transmit the first multiplexed data through the communication line 63 to the second communication device 64. On the other hand, the second communication device 64 is connected to the second transmission data buffer 66 for receiving the second multiplexed data from the second transmission data buffer 66 to transmit the second multiplexed data through the communication line 63 to the first communication device 62. The first communication device 62 receives the second multiplexed data from the second communication device 64, whilst the second communication device 64 receives the first multiplexed data from the first communication device 62. The first and second terminal devices 51 and 65 further have first and second receiving data buffers 61 and 67 respectively for temporary storing the received data. The first receiving data buffer 61 is connected to the first communication device 62 for receiving the second multiplexed data from the first communication device 62 to temporary store the second multiplexed data. The second receiving data buffer 62 is connected to the second communication device 64 for receiving the first multiplexed data from the second communication device 64 to temporary store the first multiplexed data. The first and second terminal devices 51 and 65 further have first and second demultiplexers 59 and 69 respectively for separating the multiplexed data into voice and image data. The first demultiplexer 59 is connected to the first receiving data buffer 61 for receiving the second multiplexed data to demultiplex the second multiplexed data into second image data and second voice data separated from each other. The second demultiplexer 69 is connected to the second receiving data buffer 67 for receiving the first multiplexed data to demultiplex the first multiplexed data into first image data and first voice data separated from each other. The first and second terminal devices 51 and 65 further have first and second decompressors 57 and 69 respectively for decompressing the image data and the voice data separately. The first decompressor 57 is connected to the first demultiplexer 59 for receiving the second image data and the second voice data to expend the second image data and the second voice data separately. The second decompressor 71 is connected to the second demultiplexer 69 for receiving the first image data and the first voice data to expend the first image data and the first voice data separately. The first and second terminal devices 51 and 65 further have first and second speakers 54 and 74 as well as first and second displays 55 and 75 respectively for re-producing the voice data and the image data. The first speaker 54 is connected to the first decompressor 57 for receiving the second voice data from the first decompressor 57 to reproduce the second voice data as a voice. The first display 55 is also connected to the first decompressor 57 for receiving the second image data from the first decompressor 57 to reproduce the second image data on a screen of the first display 55. The second speaker 74 is connected to the second decompressor 71 for receiving the first voice data from the second decompressor 71 to reproduce the first voice data as a voice. The second display 75 is also connected to the second decompressor 71 for receiving the first image data from the second decompressor 71 to reproduce the first image data on a screen of the second display 75.

In Japanese laid-open patent publication No. 4-58687, a method of controlling an amount of generated codes is disclosed, wherein a capacity of a data transmission buffer is supervised to control an amount of generation of image codes for controlling the amount of data. This publication is, however, silent on a control to the voice data.

In Japanese laid-open patent publication No. 9-116885, an apparatus and a method of management of a communication load of a television conference system as well as a terminal device if the television conference system are disclosed, wherein a plurality of terminal devices are located at different places and connected through communication lines to each other. Loads on communications of the communication lines are supervised so that if the load is over a predetermined value, then a priority is given to the display of images and voices of a person which is not speaking. This publication does not address changing voice and image data formats for continuation of the television conference.

The existent communication lines for transferring the compressed and multiplexed data for the video conference may comprise various types of commination lines, for example, high speed communication lines such as ISDN and ATM and general lines such as POTS. Although the high speed communication lines such as ISDN and ATM are of course preferable, those high speed communication lines are still minor and the majority communication lines are the general lines such as POTS.

The general lines such as POTS have a low capacity of transferring data, for which reason a large size of the general lines is thus required to transfer a large amount of data at the required high speed. The image data and the voice data are once compressed in the transmitter side terminal device for transmission of the compressed data to the receiving side terminal device before the receiving side terminal device decompresses the compressed image and voice data to reproduce the image and voice data separately. The data transfer rate of the general communication line POTS is insufficient for smoothly reproducing the image data and the voice data so that discontinuations of the image and voice may appear during the video conference and the re-produced image on the display and the re-produced voice from the speaker are asynchronous with each other.

Actually, however, it might be possible to continue the conference even if the image and the voice are asynchronous with each other although it is of course undesirable. It might also be possible to continue the conference via the voice only even if the image is discontinued although it is of course undesirable. Notwithstanding, it might be difficult to continue the conference via the image only when the voice is discontinued.

So long as the general communication lines are used for the video conference system, it is difficult to solve the above problems with the insufficient transfer rate for smooth re-production of the image data and the voice data without my discontinuation. In order to continue the video conference, it is essential to continue the transfer of at least the voice data, for which reason if the required transfer rate of data to be transferred on the communication line exceeds the capacity of the communication line, or if the terminal device has an over-load, then a priority is given to the transfer of the voice data to continue the transfer of at least the voice data even the transfer of the image data is discontinued.

In the above circumstances, it had been required to develop an improved video conference system for transferring video data and image data free from the above problems.

Accordingly, it is an object of the present invention to provide an improved video conference system for transferring video data and image data from the above problems.

It is a further object of the present invention to provide an improved video conference system for so transferring video data and image data as to permit a continuation of video conference even if the currently required data transfer rate is beyond a current capacity of a general communication line in use.

It is a still further object of the present invention to provide an improved video conference system which has a plurality of image data formats and a plurality of video data formats so that if the currently required data transfer rate is beyond a current capacity of a general communication line in use, then the currently used image data format and voice format are changed so as to continue the transfer of the voice data for permitting a continuation of video conference.

It is yet a further object of the present invention to provide an improved video conference system for so transferring video data and image data as to permit a continuation of video conference even if a CPU enters into an over-load state.

It is a further more object of the present invention to provide an improved video conference system which has a plurality of image data formats and a plurality of video data formats so that if a CPU enters into an over-load state, then the currently image data processing rate is decreased to continue the transfer of the voice data for permitting a continuation of video conference.

It is still more object of the present invention to provide a novel method of controlling transfers of video data and image data through a communication line between terminal devices for implementation of a video conference free from the above problem.

It is moreover object of the present invention to provide a novel method of controlling transfers of video data and image data through a communication line between terminal devices for implementation of a video conference so as to permit a continuation of video conference even if the currently required data transfer rate is beyond a current capacity of a general communication line in use.

It is another object of the present invention to provide a novel method of controlling transfers of video data and image data through a communication line between terminal devices for implementation of a video conference, so that if the currently required data transfer rate is beyond a current capacity of a general communication line in use, then the currently used image data format and voice format are changed so as to continue the transfer of the voice data for permitting a continuation of video conference.

It is still another object of the present invention to provide a novel method of controlling transfers of video data and image data through a communication line between terminal devices for implementation of a video conference so as to permit a continuation of video conference even if a CPU enters into an over-load state.

It is yet another object of the present invention to provide a novel method of controlling transfers of video data and image data through a communication line between terminal devices for implementation of a video conference so that if a CPU enters into an over-load state, then the currently image data processing rate is decreased to continue the transfer of the voice data for permitting a continuation of video conference.

The first present invention provides a system for transferring multiplexed data including image data and voice data through at least a communication line between at least two terminal devices. The system includes : a monitoring unit for monitoring a current state of transfer of the multiplexed data on the communication line ; and a controller unit for controlling transfers of the image data and the voice data, so that a priority is given to the transfer of the voice data whilst the transfer of the image data is controlled or discontinued in order to continue a current transfer of the voice data when the monitoring unit recognizes a delay in transfer of the multiplexed data on the communication line.

The second present invention provides a system for transferring multiplexed data including image data and voice data through at least a communication line between at least two terminal devices. The system includes : a monitoring unit for monitoring a load of a processor provided in each of the terminal devices ; and a controller unit for controlling processing speeds of the image data and the voice data, so that the priority is given to the processing of the voice data whilst the processing of the image data is controlled or discontinued in order to continue the current processing speed of the voice data when the monitoring unit recognizes an over-load of the processor.

The above and other objects, features and advantages of the present invention will be apparent from the following descriptions.

Preferred embodiments according to the present invention will be described in detail with reference to the accompanying drawings.
FIG. 1 is a block diagram illustrative of the conventional video conference data transfer system for transferring image data and voice data for the video conference.
FIG. 2 is a block diagram illustrative of a novel video conference system for transferring image data and voice data through a general communication line between two terminal devices in a first embodiment in accordance with the present invention.
FIG. 3 is a block diagram illustrative of a novel video conference system for transferring image data and voice data through a general communication line between two terminal devices in a second embodiment in accordance with the present invention.

The first present invention provides a system for transferring multiplexed data including image data and voice data through at least a communication line between at least two terminal devices. The system includes : a monitoring unit for monitoring a current state of transfer of the multiplexed data on the communication line ; and a controller unit for controlling transfers of the image data and the voice data, so that a priority is given to the transfer of the voice data whilst the transfer of the image data is controlled or discontinued in order to continue a current transfer of the voice data when the monitoring unit recognizes a delay in transfer of the multiplexed data on the communication line.

It is preferable that the controller unit controls the current transfer of the voice data only when the monitoring unit still recognizes the delay in transfer of the multiplexed data on the communication line even after the transfer of the image data is discontinued.

It is also preferable that the monitoring unit is operated to monitor an amount of the multiplexed data accumulated in a data storage unit for subsequent transfer through the communication line so that only when the amount of the multiplexed data accumulated in the data storage unit exceeds a predetermined level, then the controller unit performs the control operation.

It is also preferable that the controller unit controls the transfer of the image data by changing an original image data format defining a first data transfer rate as a normal data transfer rate to other image data format defining a second data transfer rate which is lower than the first data transfer rate when the monitoring unit recognizes the delay in transfer of the multiplexed data on the communication line.

It is further preferable that the controller unit further controls the transfer of the image data by returning the other image data format into the original image data format when the monitoring unit recognizes no delay in transfer of the multiplexed data on the communication line.

It is also preferable that the controller unit further controls the transfer of the image data by further changing the other image data format into still other image data format defining a third data transfer rate which is lower than the second data transfer rate when the monitoring unit still recognizes the delay in transfer of the multiplexed data on the communication line.

It is further preferable that the controller unit further controls the transfer of the image data by returning the still other image data format into the other image data format when the monitoring unit recognizes no delay in transfer of the multiplexed data on the communication line.

It is also preferable that the controller unit further controls the transfer of the image data by discontinuing the transfer of the image data only when the monitoring unit still recognizes the delay in transfer of the multiplexed data on the communication line even after the controller unit changes the image data format into a final image data format defining a lowest data transfer rate.

It is further preferable that the controller unit further controls the transfer of the image data by re-starting the image data transfer when the monitoring unit recognizes no delay in transfer of the multiplexed data on the communication line.

It is also preferable that the monitoring unit and the controller unit are realized by a data controller provided in each of the terminal devices.

It is also preferable that monitoring unit further monitors a load of a processor provided in each of the terminal devices for permitting the controller unit to control processing speeds of the image data and the voice data by the processor, so that the priority is given to the processing of the voice data whilst the processing of the image data is controlled or discontinued in order to continue the current processing speed of the voice data when the monitoring unit recognizes an over-load of the processor.

It is also preferable that the controller unit controls the current processing speed of the voice data only when said controller still recognizes said over-load of said processor even after the processing of the image data has been discontinued.

It is also preferable that the monitoring unit is operated to monitor an amount of the multiplexed data accumulated in a data storage unit for subsequent transfer through the communication line so that only when the amount of the multiplexed data accumulated in the data storage unit is less than a predetermined level, then the controller unit performs the control operation.

It is also preferable that the controller unit controls the processing speed of the image data by changing an original image data processing speed format defining a first data processing speed as a normal data processing speed to other image data processing speed format defining a second data processing speed which is lower than the first data processing speed when the monitoring unit recognizes the over-load of the processor.

It is also preferable that the controller unit further controls the processing speed of the image data by returning the other image data processing speed format into the original image data processing speed format when the monitoring unit recognizes no over-load of the processor.

It is also preferable that the controller unit further controls the processing speed of the image data by further changing the other image data processing speed format into still other image data processing speed format defining a third data processing speed which is lower than the second data processing speed when the monitoring unit still recognizes the over-load of the processor.

It is also preferable that the controller unit further controls the processing speed of the image data by returning the still other image data processing speed format into the other image data processing speed format when the monitoring unit recognizes no over-load of the processor.

It is also preferable that the controller unit further controls the processing speed of the image data by discontinuing the processing of the image data only when the monitoring unit still recognizes the over-load of the processor even after the controller unit changes the image data processing speed format into a final image data processing speed format defining a lowest data processing speed.

It is also preferable that the controller unit further controls the processing speed of the image data by re-starting the still other image data compression processing when, the monitoring unit recognizes no over-load of the processor.

It is also preferable that the controller unit controls the processing speed of the image data by controlling an operation of a compressor provided each of the terminal devices.

The second present invention provides a system for transferring multiplexed data including image data and voice data through at least a communication line between at least two terminal devices. The system includes : a monitoring unit for monitoring a load of a processor provided in each of the terminal devices ; and a controller unit for controlling processing speeds of the image data and the voice data, so that the priority is given to the processing of the voice data whilst the processing of the image data is controlled or discontinued in order to continue the current processing speed of the voice data when the monitoring unit recognizes an over-load of the processor.

It is preferable that the controller unit controls the current processing speed of the voice data only when said controller still recognizes said over-load of said processor even after the processing of the image data has been discontinued.

It is also preferable that the monitoring unit is operated to monitor an amount of the multiplexed data accumulated in a data storage unit for subsequent transfer through the communication line so that only when the amount of the multiplexed data accumulated in the data storage unit is less than a predetermined level, then the controller unit performs the control operation.

It is also preferable that the controller unit controls the processing speed of the image data by changing an original image data processing speed format defining a first data processing speed as a normal data processing speed to other image data processing speed format defining a second data processing speed which is lower than the first data processing speed when the monitoring unit recognizes the over-load of the processor.

It is also preferable that the controller unit further controls the processing speed of the image data by returning the other image data processing speed format into the original image data processing speed format when the monitoring unit recognizes no over-load of the processor.

It is also preferable that the controller unit further controls the processing speed of the image data by further changing the other image data processing speed format into still other image data processing speed format defining a third data processing speed which is lower than the second data processing speed when the monitoring unit still recognizes the over-load of the processor.

It is also preferable that the controller unit further controls the processing speed of the image data by returning the still other image data processing speed format into the other image data processing speed format when the monitoring unit recognizes no over-load of the processor.

It is also preferable that the controller unit further controls the processing speed of the image data by discontinuing the processing of the image data only when the monitoring unit still recognizes the over-load of the processor even after the controller unit changes the image data processing speed format into a final image data processing speed format defining a lowest data processing speed.

It is also preferable that the controller unit further controls the processing speed of the image data by re-starting the still other image data compression processing when the monitoring unit recognizes no over-load of the processor.

It is also preferable that the controller unit controls the processing speed of the image data by controlling an operation of a compressor provided each of the terminal devices.

It is also preferable that the monitoring unit further monitors a current state of transfer of the multiplexed data on the communication line so as to permit the controller unit to further control transfers of the image data and the voice data, so that a priority is given to the transfer of the voice data whilst the transfer of the image data is controlled or discontinued in order to continue a current transfer of the voice data when the monitoring unit recognizes a delay in transfer of the multiplexed data on the communication line.

It is also preferable that the controller unit controls the current transfer of the voice data only when the monitoring unit still recognizes the delay in transfer of the multiplexed data on the communication line even the transfer of the image data is discontinued.

It is also preferable that the monitoring unit is operated to monitor an amount of the multiplexed data accumulated in a data storage unit for subsequent transfer through the communication line so that only when the amount of the multiplexed data accumulated in the data storage unit exceeds a predetermined level, then the controller unit performs the control operation.

It is also preferable that the controller unit controls the transfer of the image data by changing an original image data format defining a first data transfer rate as a normal data transfer rate to over image data format defining a second data transfer rate which is lower than the first data transfer rate when the monitoring unit recognizes the delay in transfer of the multiplexed data on the communication line.

It is also preferable that the controller unit further controls the transfer of the image data by returning the other image data format into the original image data format when the monitoring unit recognizes no delay in transfer of the multiplexed data on the communication line.

It is also preferable that the controller unit further controls the transfer of the image data by further changing the other image data format into still other image data format defining a third data transfer rate which is lower than the second data transfer rate when the monitoring unit still recognizes the delay in transfer of the multiplexed data on the communication line.

It is also preferable that the controller unit further controls the transfer of the image data by returning the still other image data format into the other image data format when the monitoring unit recognizes no delay in transfer of the multiplexed data on the communication line.

It is also preferable that the controller unit further controls the transfer of the image data by discontinuing the transfer of the image data only when the monitoring unit still recognizes the delay in transfer of the multiplexed data on the communication line even after the controller unit changes the image data format into a final image data format defining a lowest data transfer rate.

It is also preferable that the controller unit further controls the transfer of the image data by re-starting the image data transfer when the monitoring unit recognizes no delay in transfer of the multiplexed data on the communication line.

It is also preferable that the monitoring unit and the controller unit are realized by a data controller provided in each of the terminal devices.

### FIRST EMBODIMENT:

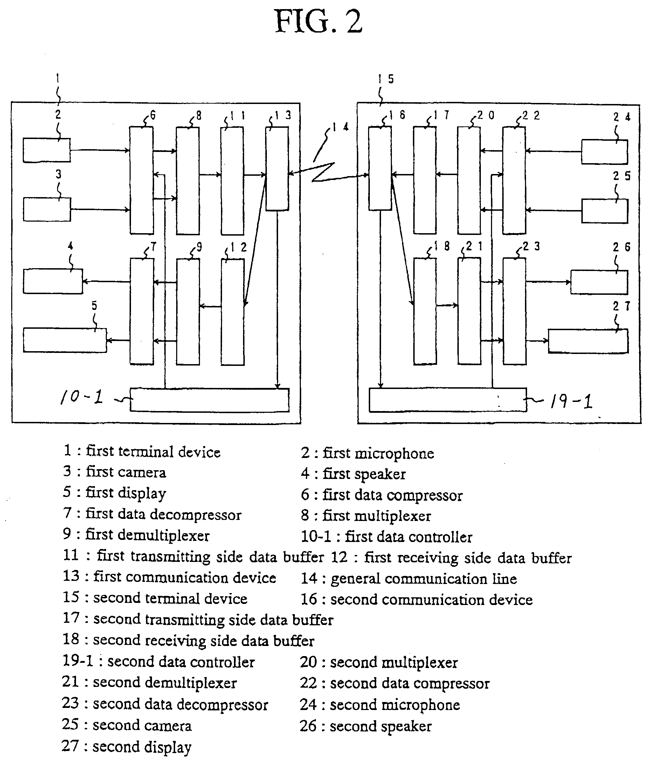

A first embodiment according to the present invention will be described in detail with reference to FIG. 2 which is a block diagram illustrative of a novel video conference system for transferring image data and voice data through a general communication line between two terminal devices. The novel video conference data transfer system comprises two terminal devices 1 and 15 and a communication line 14 connecting the two terminal devices 1 and 15 to each other or transferring image data and voice data for the video conference. The two terminal devices 1 and 15 will be referred to as a first terminal device 1 and a second terminal device 15 which have the same structure and configurations. The first and second terminal devices 1 and 15 have first and second microphones 2 and 24 respectively for capturing voices. The first and second terminal devices 1 and 15 also have first and second cameras 3 and 25 respectively for capturing images. The first and second terminal devices 1 and 15 also have first and second data compressors 6 and 22 respectively. The first compressor 6 is connected to the first microphone 2 and the first camera 3 for receiving image data captured by the first camera 3 and voice data captured by the first microphone 2 to compress the received image data and the received voice data. The second compressor 22 is also connected to the second microphone 24 and the first camera 25 for receiving image data captured by the second camera 25 and voice data captured by the second microphone 24 to compress the received image data and the received voice data. The first and second terminal devices 1 and 15 also have first and second multiplexers 8 and 20 respectively for multiplexing image data and voice data. The first multiplexer 8 is connected to the first data compressor 6 for receiving the compressed image data and the compressed voice data from the first data compressor 6 to multiplex the compressed image data and the compressed voice data. The second multiplexer 20 is connected to the second data compressor 22 for receiving the compressed image data and the compressed voice data from the second data compressor 22 to multiplex the compressed image data and the compressed voice data. The first and second terminal devices 1 and 15 also have first and second transmission data buffers 11 and 17 respectively for temporary storing the multiplexed data. The first transmission data buffer 11 is connected to the first multiplexer 8 for receiving and temporary storing the multiplexed data. The second transmission data buffer 17 is connected to the second multiplexer 20 for receiving and temporary storing the multiplexed data. The first and second terminal devices 1 and 15 also have first and second communication devices 13 and 16 respectively. The first and second communication devices 13 and 16 are connected to each other through the communication line 14. The first communication device 13 is connected to the first transmission data buffer 11 for receiving the first multiplexed data from the first transmission data buffer 11 to transmit the first multiplexed data through the communication line 14 to the second communication device 16. On the other hand, the second communication device 16 is connected to the second transmission data buffer 17 for receiving the second multiplexed data from the second transmission data buffer 17 to transmit the second multiplexed data through the communication line 14 to the first communication device 13. The first communication device 13 receives the second multiplexed data from the second communication device 16, whilst the second communication device 16 receives the first multiplexed data from the first communication device 13. The first and second terminal devices 1 and 15 further have first and second receiving data buffers 12 and 18 respectively for temporary storing the received data. The first receiving data buffer 12 is connected to the first communication device 13 for receiving the second multiplexed data from the first communication device 13 to temporary store the second multiplexed data. The second receiving data buffer 13 is connected to the second communication device 16 for receiving the first multiplexed data from the second communication device 16 to temporary store the first multiplexed data. The first and second terminal devices 1 and 15 further have first and second demultiplexers 9 and 21 respectively for separating the multiplexed data into voice and image data. The first demultiplexer 9 is connected to the first receiving data buffer 12 for receiving the second multiplexed data to demultiplex the second multiplexed data into second image data and second voice data separated from each other. The second demultiplexer 21 is connected to the second receiving data buffer 18 for receiving the first multiplexed data to demultiplex the first multiplexed data into first image data and first voice data separated from each other. The first and second terminal devices 1 and 15 further have first and second decompressors 7 and 21 respectively for decompressing the image data and the voice data separately. The first decompressor 7 is connected to the first demultiplexer 9 for receiving the second image data and the second voice data to expend the second image data and the second voice data separately. The second decompressor 23 is connected to the second demultiplexer 21 for receiving the first image data and the first voice data to expend the first image data and the first voice data separately. The first and second terminal devices 1 and 15 further have first and second speakers 4 and 26 as well as first and second displays 5 and 27 respectively for re-producing the voice data and the image data. The first speaker 4 is connected to the first decompressor 7 for receiving the second voice data from the first decompressor 7 to reproduce the second voice data as a voice. The first display 5 is also connected to the first decompressor 7 for receiving the second image data from the first decompressor 7 to reproduce the second image data on a screen of the first display 5. The second speaker 26 is connected to the second decompressor 23 for receiving the first voice data from the second decompressor 23 to reproduce the first voice data as a voice. The second display 27 is also connected to the second decompressor 23 for receiving the first image data from the second decompressor 23 to reproduce the first image data on a screen of the second display 27.

The first and second terminal devices 1 and 15 also have first and second data controllers 10-1 and 19-1 respectively. The first data controller 10-1 has both a monitoring function for monitoring a current state of transfer of the image data and voice data through the general communication line 14 and a controlling function for controlling transfers of the image data and the voice data, so that a priority is given to the transfer of the voice data whilst the transfer of the image data is controlled or discontinued in order to continue a current transfer of the voice data when the controller recognizes a delay in transfer of multiplexed data containing the image and voice data on the general communication line 14. The second data controller 19-1 has both a monitoring function for monitoring a current state of transfer of the image data and voice data through the general communication line 14 and a controlling function for controlling transfers of the image data and the voice data, so that a priority is given to the transfer of the voice data whilst the transfer of the image data is controlled or discontinued in order to continue a current transfer of the voice data when the controller recognizes a delay in transfer of multiplexed data containing the image and voice data on the general communication line 14. The first data controller 10-1 is connected to the first communication device 13 for receiving an information about an amount of the multiplexed data accumulated in the first transmitting side data buffer 11 for subsequent transfer through the communication line 14 in order to monitor, through the first communication device 13, the amount of the multiplexed data accumulated in the first transmitting side data buffer 11, so that only when the amount of the multiplexed data accumulated in the first transmitting side data buffer 11 exceeds a predetermined level, then the above control function of the first data controller 10-1 is activated. The second data controller 19-1 is also connected to the second communication device 16 for receiving an information about an amount of the multiplexed data accumulated in the second transmitting side data buffer 17 for subsequent transfer through the communication line 14 in order to monitor, through the first communication device 16, the amount of the multiplexed data accumulated in the second transmitting side data buffer 17, so that only when the amount of the multiplexed data accumulated in the second transmitting side data buffer 17 exceeds a predetermined level, then the above control function of the second data controller 19-1 is activated. The first data controller 10-1 is further connected to the first compressor 6 to send the first compressor 6 an instruction of changing an image data compression format in order to control the transfer of the image data by changing an original image data format defining a first data transfer rate as a normal data transfer rate to other image data format defining a second data transfer rate which is lower than the first data transfer rate when the first data controller 10-1 recognizes the delay in transfer of the image data and the voice data on the communication line in accordance with the information about the data accumulation in the first transmitting side data buffer 11 supplied from the first communication device 13. The second data controller 19-1 is further connected to the second compressor 22 to send the second compressor 22 an instruction of changing an image data compression format in order to control the transfer of the image data by changing an original image data format defining a first data transfer rate as a normal data transfer rate to other image data format defining a second data transfer rate which is lower than the first data transfer rate when the second data controller 19-1 recognizes the delay in transfer of the image data and the voice data on the communication line in accordance with the information about the data accumulation in the second transmitting side data buffer 17 supplied from the second communication device 16. The first data controller 10-1 further controls the transfer of the image data by returning the other image data format into the original image data format when the first data controller 10-1 recognizes no delay in transfer of the image data and the voice data on the general communication line 14. The second data controller 19-1 further controls the transfer of the image data by returning the other image data format into the original image data format when the second data controller 19-1 recognizes no delay in transfer of the image data and the voice data on the general communication line 14. The first data controller 10-1 further controls the transfer of the image data by further changing the other image data format into still other image data format defining a third data transfer rate which is lower than the second data transfer rate when the first data controller 10-1 still recognizes the delay in transfer of the image data and the voice data on the general communication line 14. The second data controller 19-1 further controls the transfer of the image data by further changing the other image data format into still other image data format defining a third data transfer rate which is lower than the second data transfer rate when the second data controller 19-1 still recognizes the delay in transfer of the image data and the voice data on the general communication line 14. The first data controller 10-1 further controls the transfer of the image data by returning the still other image data format into the other image data format when the first data controller 10-1 recognizes no delay in transfer of the image data and the voice data on the general communication line 14. The second data controller 19-1 further controls the transfer of the image data by returning the still other image data format into the other image data format when the second data controller 19-1 recognizes no delay in transfer of the image data and the voice data on the general communication line 14. The first data controller 10-1 further controls the transfer of the image data by discontinuing the transfer of the image data only when the first data controller 10-1 still recognizes the delay in transfer of the image data and the voice data on the general communication line 14 even after the first data controller 10-1 changes the image data format into a final image data format defining a lowest data transfer rate. The second data controller 19-1 further controls the transfer of the image data by discontinuing the transfer of the image data only when the second data controller 19-1 still recognizes the delay in transfer of the image data and the voice data on the general communication line 14 even after the second data controller 19-1 changes the image data format into a final image data format defining a lowest data transfer rate. The first data controller 10-1 further controls the transfer of the image data by re-starting the image data transfer when the first data controller 10-1 recognizes no delay in transfer of the image data and the voice data on the general communication line 14. The second data controller 19-1 further controls the transfer of the image data by re-starting the image data transfer when the second data controller 19-1 recognizes no delay in transfer of the image data and the voice data on the general communication line 14. The first data controller 10-1 controls the current transfer of the voice data only when the first data controller 10-1 still recognizes the delay in transfer of the image data and the voice data on the general communication line 14 even the transfer of the image data is discontinued, wherein the first data controller 10-1 sends the first compressor 6 an instruction of changing an original voice data compression format into other voice data compression format which is lower than the original voice data compression format, in order to control the transfer of the voice data. The second data controller 19-1 controls the current transfer of the voice data only when the second data controller 19-1 still recognizes the delay in transfer of the image data and the voice data on the general communication line 14 even the transfer of the image data is discontinued, wherein the second data controller 19-1 sends the second compressor 22 an instruction of changing an original voice data compression format into other voice data compression format which is lower than the original voice data compression format, in order to control the transfer of the voice data.

### SECOND EMBODIMENT:

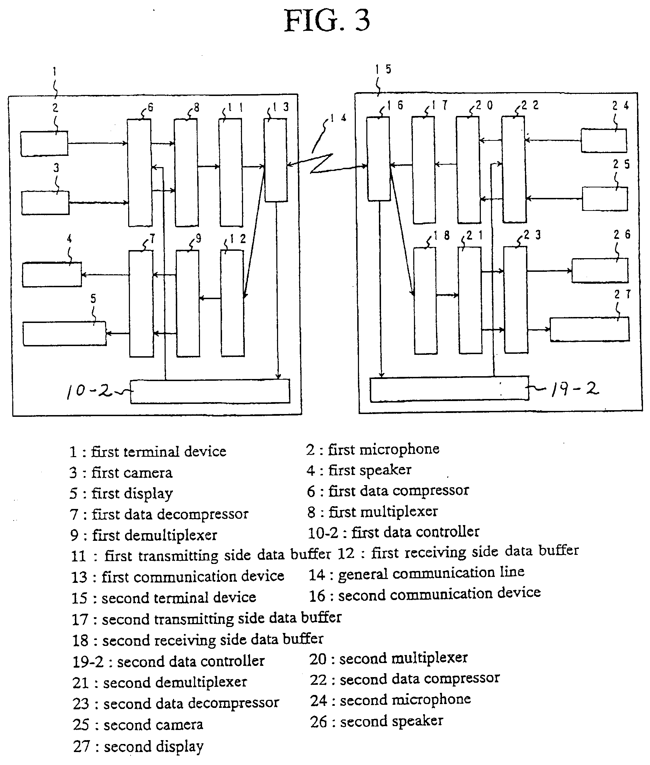

A second embodiment according to the present invention will be described in detail with reference to FIG. 3 which is a block diagram illustrative of a novel video conference system for transferring image data and voice data through a general communication line between two terminal devices. The novel video conference data transfer system comprises two terminal devices 1 and 15 and a communication line 14 connecting the two terminal devices 1 and 15 to each other or transferring image data and voice data for the video conference. The two terminal devices 1 and 15 will be referred to as a first terminal device 1 and a second terminal device 15 which have the same structure and configurations. The first and second terminal devices 1 and 15 have first and second microphones 2 and 24 respectively for capturing voices. The first and second terminal devices 1 and 15 also have first and second cameras 3 and 25 respectively for capturing images. The first and second terminal devices 1 and 15 also have first and second data compressors 6 and 22 respectively. The first compressor 6 is connected to the first microphone 2 and the first camera 3 for receiving image data captured by the first camera 3 and voice data captured by the first microphone 2 to compress the received image data and the received voice data. The second compressor 22 is also connected to the second microphone 24 and the first camera 25 for receiving image data captured by the second camera 25 and voice data captured by the second microphone 24 to compress the received image data and the received voice data. The first and second terminal devices 1 and 15 also have first and second multiplexers 8 and 20 respectively for multiplexing image data and voice data. The first multiplexer 8 is connected to the first data compressor 6 for receiving the compressed image data and the compressed voice data from the first data compressor 6 to multiplex the compressed image data and the compressed voice data. The second multiplexer 20 is connected to the second data compressor 22 for receiving the compressed image data and the compressed voice data from the second data compressor 22 to multiplex the compressed image data and the compressed voice data. The first and second terminal devices 1 and 15 also have first and second transmission data buffers 11 and 17 respectively for temporary storing the multiplexed data. The first transmission data buffer 11 is connected to the first multiplexer 8 for receiving and temporary storing the multiplexed data. The second transmission data buffer 17 is connected to the second multiplexer 20 for receiving and temporary storing the multiplexed data. The first and second terminal devices 1 and 15 also have first and second communication devices 13 and 16 respectively. The first and second communication devices 13 and 16 are connected to each other through the communication line 14. The first communication device 13 is connected to the first transmission data buffer 11 for receiving the first multiplexed data from the first transmission data buffer 11 to transmit the first multiplexed data through the communication line 14 to the second communication device 16. On the other hand, the second communication device 16 is connected to the second transmission data buffer 17 for receiving the second multiplexed data from the second transmission data buffer 17 to transmit the second multiplexed data through the communication line 14 to the first communication device 13. The first communication device 13 receives the second multiplexed data from the second communication device 16, whilst the second communication device 16 receives the first multiplexed data from the first communication device 13. The first and second terminal devices 1 and 15 further have first and second receiving data buffers 12 and 18 respectively for temporary storing the received data. The first receiving data buffer 12 is connected to the first communication device 13 for receiving the second multiplexed data from the first communication device 13 to temporary store the second multiplexed data. The second receiving data buffer 13 is connected to the second communication device 16 for receiving the first multiplexed data from the second communication device 16 to temporary store the first multiplexed data. The first and second terminal devices 1 and 15 further have first and second demultiplexers 9 and 21 respectively for separating the multiplexed data into voice and image data. The first demultiplexer 9 is connected to the first receiving data buffer 12 for receiving the second multiplexed data to demultiplex the second multiplexed data into second image data and second voice data separated from each other. The second demultiplexer 21 is connected to the second receiving data buffer 18 for receiving the first multiplexed data to demultiplex the first multiplexed data into first image data and first voice data separated from each other. The first and second terminal devices 1 and 15 further have first and second decompressors 7 and 21 respectively for decompressing the image data and the voice data separately. The first decompressor 7 is connected to the first demultiplexer 9 for receiving the second image data and the second voice data to expend the second image data and the second voice data separately. The second decompressor 23 is connected to the second demultiplexer 21 for receiving the first image data and the first voice data to expend the first image data and the first voice data separately. The first and second terminal devices 1 and 15 further have first and second speakers 4 and 26 as well as first and second displays 5 and 27 respectively for re-producing the voice data and the image data. The first speaker 4 is connected to the first decompressor 7 for receiving the second voice data from the first decompressor 7 to reproduce the second voice data as a voice. The first display 5 is also connected to the first decompressor 7 for receiving the second image data from the first decompressor 7 to reproduce the second image data on a screen of the first display 5. The second speaker 26 is connected to the second decompressor 23 for receiving the first voice data from the second decompressor 23 to reproduce the first voice data as a voice. The second display 27 is also connected to the second decompressor 23 for receiving the first image data from the second decompressor 23 to reproduce the first image data on a screen of the second display 27.

The first and second terminal devices 1 and 15 also have first and second data controllers 10-2 and 19-2 respectively. The first data controller 10-2 has both a monitoring function for monitoring a load of a first CPU provided in the first compressor 6 in the first terminal device 1 for data compressing operations and a controlling function for controlling processing speeds of the image data and the voice data by the first CPU, so that the priority is given to the processing of the voice data by the first CPU whilst the processing of the image data by the first CPU is controlled or discontinued in order to continue the current processing speed of the voice data by the first CPU when the first data controller 10-2 recognizes an over-load of the first CPU. The second data controller 19-2 has both a monitoring function for monitoring a load of a second CPU provided in the second compressor 22 in the second terminal device 15 for data compressing operations and a controlling function for controlling processing speeds of the image data and the voice data by the second CPU, so that the priority is given to the processing of the voice data by the second CPU whilst the processing of the image data by the second CPU is controlled or discontinued in order to continue the current processing speed of the voice data by the second CPU when the second data controller 19-2 recognizes an over-load of the second CPU. The first data controller 10-2 is connected to the first communication device 13 for receiving, through the first communication device 13, about informations of an amount of the image data and the voice data accumulated in the first transmitting side data buffer 11 for subsequent transfer through the general communication line 14 in order to monitor the amount of the accumulated image and voice data, so that only when the amount of the image and voice data accumulated in the first transmitting side data buffer 11 is less than a predetermined level, then the control function of the first data controller 10-2 is activated. The second data controller 19-2 is connected to the second communication device 16 for receiving, through the second communication device 16, about informations of an amount of the image data and the voice data accumulated in the second transmitting side data buffer 17 for subsequent transfer through the general communication line 14 in order to monitor the amount of the accumulated image and voice data, so that only when the amount of the image and voice data accumulated in the second transmitting side data buffer 17 is less than a predetermined level, then the control function of the second data controller 19-2 is activated. The first data controller 10-2 is also connected to the first data compressor 6 for sending the first data compressor 6 an instruction to change an original image data processing speed format defining a first image data processing speed as a normal image data processing speed to other image data processing speed format defining a second image data processing speed which is lower than the first image data processing speed when the first data controller 10-2 recognizes the over-load of the first CPU, so as to control the processing speed of the image data. The second data controller 19-2 is also connected to the second data compressor 22 for sending the second data compressor 22 an instruction to change an original image data processing speed format defining a first image data processing speed as a normal image data processing speed to other image data processing speed format defining a second image data processing speed which is lower than the first image data processing speed when the second data controller 19-2 recognizes the over-load of the second CPU, so as to control the processing speed of the image data. The first data controller 10-2 further controls the processing speed of the image data by returning the other image data processing speed format into the original image data processing speed format when the first data controller 10-2 recognizes no over-load of the first CPU. The second data controller 19-2 further controls the processing speed of the image data by returning the other image data processing speed format into the original image data processing speed format when the second data controller 19-2 recognizes no over-load of the second CPU. The first data controller 10-2 further controls the processing speed of the image data by sending the first data compressor 6 an instruction of further changing the other image data processing speed format into still other image data processing speed format defining a third data processing speed which is lower than the second data processing speed when the first data controller 10-2 still recognizes the over-load of the first CPU. The second data controller 19-2 further controls the processing speed of the image data by sending the second data compressor 22 an instruction of further changing the other image data processing speed format into still other image data processing speed format defining a third data processing speed which is lower than the second data processing speed when the second data controller 19-2 still recognizes the over-load of the second CPU. The first data controller 10-2 further controls the processing speed of the image data by returning the still other image data processing speed format into the other image data processing speed format when the first data controller 10-2 recognizes no over-load of the first CPU. The second data controller 10-2 further controls the processing speed of the image data by returning the still other image data processing speed format into the other image data processing speed format when the second data controller 19-2 recognizes no over-load of the second CPU. The first data controller 10-2 further controls the processing speed of the image data by sending the first data compressor 6 an instruction of discontinuing the data compression processing of the image data only when the first data controller 10-2 still recognizes the over-load of the first CPU even after the first data controller 10-2 has changed the image data processing speed format into a final image data processing speed format defining a lowest data processing speed. The second data controller 19-2 further controls the processing speed of the image data by sending the second data compressor 22 an instruction of discontinuing the data compression processing of the image data only when the second data controller 19-2 still recognizes the over-load of the second CPU even after the second data controller 19-2 has changed the image data processing speed format into a final image data processing speed format defining a lowest data processing speed. The first data controller 10-2 further controls the processing speed of the image data by re-starting the still other image data compression processing when the controller recognizes no over-load of the first CPU. The second data controller 19-2 further controls the processing speed of the image data by re-starting the still other image data compression processing when the controller recognizes no over-load of the second CPU. The first data controller 10-2 controls the current processing speed of the voice data by sending the first data compressor 6 an instruction of changing an original voice data compression format defining a first data compression rate as a normal data compression rate into another voice data compression format defining a second data compression rate which is lower than the first data compression rate only when the first data controller 10-2 still recognizes the over-load of the first CPU even after the processing of compression of the image data has been discontinued. The second data controller 19-2 controls the current processing speed of the voice data by sending the second data compressor 22 an instruction of changing an original voice data compression format defining a first data compression rate as a normal data compression rate into another voice data compression format defining a second data compression rate which is lower than the first data compression rate only when the second data controller 19-2 still recognizes the over-load of the second CPU even after the processing of compression of the image data has been discontinued.

Whereas modifications of the present invention will be apparent to a person having ordinary skill in the art, to which the invention pertains, it is to be understood that embodiments as shown and described by way of illustrations are by no unit intended to be considered in a limiting sense. Accordingly, it is to be intended to cover by claims all modifications which fall within the spirit and scope of the present invention.

## Claims

1. A system for transferring multiplexed data including image data and voice data through at least a communication line between at least two terminal devices, characterized in that said system includes:
a monitoring means for monitoring a current state of transfer of said multiplexed data on said communication line ; and
a controller means for controlling transfers of said image data and said voice data, so that a priority is given to said transfer of said voice data whilst said transfer of said image data is controlled or discontinued in order to continue a current transfer of said voice data when said monitoring means recognizes a delay in transfer of said multiplexed data on said communication line.

2. The system as claimed in claim 1, characterized in that said controller means controls said current transfer of said voice data only when said monitoring means still recognizes said delay in transfer of said multiplexed data on said communication line even after said transfer of said image data has been discontinued.

3. The system as claimed in claim 1, characterized in that said monitoring means is operated to monitor an amount of said multiplexed data accumulated in a data storage means for subsequent transfer through said communication line so that only when said amount of said multiplexed data accumulated in said data storage means exceeds a predetermined level, then said controller means performs said control operation.

4. The system as claimed in claim 1, characterized in that said controller means controls said transfer of said image data by changing an original image data format defining a first data transfer rate as a normal data transfer rate to other image data format defining a second data transfer rate which is lower than said first data transfer rate when said monitoring means recognizes said delay in transfer of said multiplexed data on said communication line.

5. The system as claimed in claim 4, characterized in that said controller means further controls said transfer of said image data by returning said other image data format into said original image data format when said monitoring means recognizes no delay in transfer of said multiplexed data on said communication line.

6. The system as claimed in claim 4, characterized in that said controller means further controls said transfer of said image data by further changing said other image data format into still other image data format defining a third data transfer rate which is lower than said second data transfer rate when said monitoring means still recognizes said delay in transfer of said multiplexed data on said communication line.

7. The system as claimed in claim 6, characterized in that said controller means further controls said transfer of said image data by returning said still other image data format into said other image data format when said monitoring means recognizes no delay in transfer of said multiplexed data on said communication line.

8. The system as claimed in claim 4, characterized in that said controller means further controls said transfer of said image data by discontinuing said transfer of said image data only when said monitoring means still recognizes said delay in transfer of said multiplexed data on said communication line even after said controller means changes said image data format into a final image data format defining a lowest data transfer rate.

9. The system as claimed in claim 8, characterized in that said controller means further controls said transfer of said image data by re-starting said still other image data format when said monitoring means recognizes no delay in transfer of said multiplexed data on said communication line.

10. The system as claimed in claim 1, characterized in that said monitoring means and said controller means are realized by a data controller provided in each of said terminal devices.

11. The system as claimed in claim 1, characterized in that monitoring means further monitors a load of a processor provided in each of said terminal devices for permitting said controller means to control processing speeds of said image data and said voice data by said processor, so that said priority is given to said processing of said voice data whilst said processing of said image data is controlled or discontinued in order to continue said current processing speed of said voice data when said monitoring means recognizes an over-load of said processor.

12. The system as claimed in claim 11, characterized in that said controller means controls said current processing speed of said voice data only when said controller means still recognizes said over-load of said processor even after said processing of said image data has been discontinued.

13. The system as claimed in claim 11, characterized in that said monitoring means is operated to monitor an amount of said multiplexed data accumulated in a data storage means for subsequent transfer through said communication line so that only when said amount of said multiplexed data accumulated in said data storage means is less than a predetermined level, then said controller means performs said control operation.

14. The system as claimed in claim 11, characterized in that said controller means controls said processing speed of said image data by changing an original image data processing speed format defining a first data processing speed as a normal data processing speed to other image data processing speed format defining a second data processing speed which is lower than said first data processing speed when said monitoring means recognizes said over-load of said processor.

15. The system as claimed in claim 14, characterized in that said controller means further controls said processing speed of said image data by returning said other image data processing speed format into said original image data processing speed format when said monitoring means recognizes no over-load of said processor.

16. The system as claimed in claim 14, characterized in that said controller means further controls said processing speed of said image data by further changing said other image data processing speed format into still other image data processing speed format defining a third data processing speed which is lower than said second data processing speed when said monitoring means still recognizes said over-load of said processor.

17. The system as claimed in claim 16, characterized in that said controller means further controls said processing speed of said image data by returning said still other image data processing speed format into said other image data processing speed format when said monitoring means recognizes no over-load of said processor.

18. The system as claimed in claim 14, characterized in that said controller means further controls said processing speed of said image data by discontinuing said processing of said image data only when said monitoring means still recognizes said over-load of said processor even after said controller means changes said image data processing speed format into a final image data processing speed format defining a lowest data processing speed.

19. The system as claimed in claim 18, characterized in that said controller means further controls said processing speed of said image data by re-starting said still other image data compression processing when said monitoring means recognizes no over-load of said processor.

20. The system as claimed in claim 11, characterized in that said controller means controls said processing speed of said image data by controlling an operation of a compressor provided each of said terminal devices.

21. A system for transferring multiplexed data including image data and voice data through at least a communication line between at least two terminal devices, characterized in that said system includes :
a monitoring means for monitoring a load of a processor provided in each of said terminal devices ; and
a controller means for controlling processing speeds of said image data and said voice data, so that said priority is given to said processing of said voice data whilst said processing of said image data is controlled or discontinued in order to continue said current processing speed of said voice data when said monitoring means recognizes an over-load of said processor.

22. The system as claimed in claim 21, characterized in that said controller means controls said current processing speed of said voice data only when said processing of said image data is discontinued.

23. The system as claimed in claim 21, characterized in that said monitoring means is operated to monitor an amount of said multiplexed data accumulated in a data storage means for subsequent transfer through said communication line so that only when said amount of said multiplexed data accumulated in said data storage means is less than a predetermined level, then said controller means performs said control operation.

24. The system as claimed in claim 21, characterized in that said controller means controls said processing speed of said image data by changing an original image data processing speed format defining a first data processing speed as a normal data processing speed to other image data processing speed format defining a second data processing speed which is lower than said first data processing speed when said monitoring means recognizes said over-load of said processor.

25. The system as claimed in claim 24, characterized in that said controller means further controls said processing speed of said image data by returning said other image data processing speed format into said original image data processing speed format when said monitoring means recognizes no over-load of said processor.

26. The system as claimed in claim 24, characterized in that said controller means further controls said processing speed of said image data by further changing said other image data processing speed format into still other image data processing speed format defining a third data processing speed which is lower than said second data processing speed when said monitoring means still recognizes said over-load of said processor.

27. The system as claimed in claim 26, characterized in that said controller means further controls said processing speed of said image data by returning said still other image data processing speed format into said other image data processing speed format when said monitoring means recognizes no over-load of said processor.

28. The system as claimed in claim 24, characterized in that said controller means further controls said processing speed of said image data by discontinuing said processing of said image data only when said monitoring means still recognizes said over-load of said processor even after said controller means changes said image data processing speed format into a final image data processing speed format defining a lowest data processing speed.

29. The system as claimed in claim 28, characterized in that said controller means further controls said processing speed of said image data by re-starting said still other image data compression processing when said monitoring means recognizes no over-load of said processor.

30. The system as claimed in claim 21, characterized in that said controller means controls said processing speed of said image data by controlling an operation of a compressor provided each of said terminal devices.

31. The system as claimed in claim 21, characterized in that said monitoring means further monitors a current state of transfer of said multiplexed data on said communication line so as to permit said controller means to further control transfers of said image data and said voice data, so that a priority is given to said transfer of said voice data whilst said transfer of said image data is controlled or discontinued in order to continue a current transfer of said voice data when said monitoring means recognizes a delay in transfer of said multiplexed data on said communication line.

32. The system as claimed in claim 31, characterized in that said controller means controls said current transfer of said voice data only when said monitoring means still recognizes said delay in transfer of said multiplexed data on said communication line even after said transfer of said image data has been discontinued.

33. The system as claimed in claim 31, characterized in that said monitoring means is operated to monitor an amount of said multiplexed data accumulated in a data storage means for subsequent transfer through said communication line so that only when said amount of said multiplexed data accumulated in said data storage means exceeds a predetermined level, then said controller means performs said control operation.

34. The system as claimed in claim 31, characterized in that said controller means controls said transfer of said image data by changing an original image data format defining a first data transfer rate as a normal data transfer rate to other image data format defining a second data transfer rate which is lower than said first data transfer rate when said monitoring means recognizes said delay in transfer of said multiplexed data on said communication line.

35. The system as claimed in claim 34, characterized in that said controller means further controls said transfer of said image data by returning said other image data format into said original image data format when said monitoring means recognizes no delay in transfer of said multiplexed data on said communication line.

36. The system as claimed in claim 34, characterized in that said controller means further controls said transfer of said image data by further changing said other image data format into still other image data format defining a third data transfer rate which is lower than said second data transfer rate when said monitoring means still recognizes said delay in transfer of said multiplexed data on said communication line.

37. The system as claimed in claim 36, characterized in that said controller means further controls said transfer of said image data by returning said still other image data format into said other image data format when said monitoring means recognizes no delay in transfer of said multiplexed data on said communication line.

38. The system as claimed in claim 34, characterized in that said controller means further controls said transfer of said image data by discontinuing said transfer of said image data only when said monitoring means still recognizes said delay in transfer of said multiplexed data on said communication line even after said controller means changes said image data format into a final image data format defining a lowest data transfer rate.

39. The system as claimed in claim 38, characterized in that said controller means further controls said transfer of said image data by re-starting said still other image data format when said monitoring means recognizes no delay in transfer of said multiplexed data on said communication line.

40. The system as claimed in claim 31, characterized in that said monitoring means and said controller means are realized by a data controller provided in each of said terminal devices.
